# EUROPEAN PATENT APPLICATION

(11) **EP 0 656 494 A1**
(43) Date of publication of application: **07.06.1995**
(21) Application number: 93119321.3
(22) Date of filing: 01.12.1993
(51) Int. Cl.: F16J 15/02, F16L 17/06

(54) **Elastomeric seal**

(71) Applicant: DU PONT DE NEMOURS INTERNATIONAL S.A., CH-1218 Le Grand-Saconnex (Genève) (CH)
(72) Inventor: Bowers, Stephen, CH-1197 Prangins, Vaud (CH); Chesnel, Philippe, F-91570 Bièvres (FR)

(57) **Abstract**

An elastomeric seal having an asymmetrical cross-section is disclosed, as well as its use at a temperature near or below its glass transition point to seal an annular space.

## Description

### Field of the Invention

The present invention is directed to an elastomeric seal, more particularly to an elastomeric seal having an asymmetrical cross-section, and its use at a temperature near or below its glass transition point to form a seal, particularly, to seal an annular space.

### Background of the Invention

Elastomeric seals, particularly those suitable for sealing annular spaces, typically have axial symmetry, such as, e.g. an "O"-ring. These seals are useful for various end uses, including in fuel injector applications for automobiles, mechanical seals and in virtually all instances where faces or shafts and housing need to be sealed.

Certain elastomeric seals having asymmetrical cross-sections are also known (cf. DDR Patent 253 283 B1). Such seals are adapted for special applications, such as for sealing axially displaceable opposing components.

The seals known heretofore are not suitable for functioning at temperatures near or below the glass transition point (Tg) of the elastomer. At such temperatures, various physical properties of the elastomeric material change, which lead to failure of the seal at such temperatures.

The successful sealing of fluids at low temperatures is an important criterion in determining whether or not a mechanical system is operational. The use of elastomers for this function is widespread for many reasons. One such reason is an elastomer's ability to be deformed to relatively high strains and then recover almost completely when the deforming force is removed. This feature of elastomer is utilized in the concept of "V" seals and "lip" seals, which are often used in dynamic applications, or where the dimensions of the surfaces to be sealed have a wide tolerance range.

Elastomers are also virtually incompressible and respond like highly viscous incompressible fluids when deformed. This trait of incompressibility makes solid elastomeric seals self-energizing, a feature that is utilized in "O"-rings and other torroidal seals against leakage at elevated pressures. The hydrostatic fluid pressure is transmitted through the seal in such a way that increasing the pressure of the fluid being sealed will also increase the sealing force applied by the seal on the sealing surfaces.

The ability of elastomers to act as highly viscous fluids, however, is only present when the seal is functioning in an application in which the temperature is above its Tg.

When a seal undergoes a large decrease in temperature, such that the temperature approaches the Tg of the elastomer, it will not respond in the same manner. Further increase in fluid pressure will not be transmitted hydrostaticly through the seal to provide a corresponding sealing response increase. The temperature reduction will cause thermal strains, or shrinkage, which is opposed to the formation of a good seal. The phenomenon of relaxation causes a time dependent reduction of both the instantaneous stress state and the potential for self-energisation, under constant deformation. This will reduce the low temperature sealing performance. For this reason, torroidal seals, such as O-rings, will often begin to leak when functioning at temperatures several degrees below their Tg.

The shortcomings of known elastomeric seals are overcome by the present invention by providing a seal adapted for use in a static application at a temperature near or below its Tg and having a specific asymmetrical cross section which succeeds in maintaining a seal despite the effects of such low temperature conditions. Seals of this type are useful particularly for relatively low pressure (e.g. to about 10 bar) applications, such as found in the previously mentioned end uses.

A further advantage of the invention is that the seal may be made from any of the known elastomer materials, thereby avoiding the need to develop new, high cost elastomers having lower Tg values.

### Brief Description of the Figure

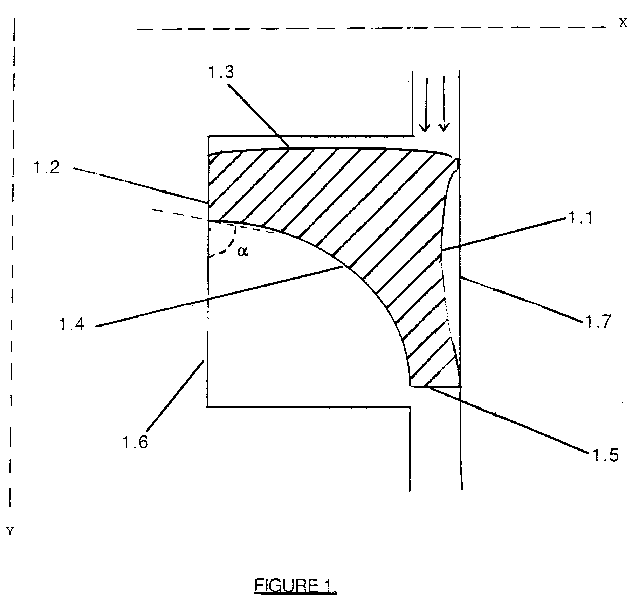

Figure 1 provides a cross-sectional view of an annular space that is sealed by a seal according to the present invention.

### Detailed Description of the Invention

It has now been found that the physical properties of an elastomer at a temperature near or below its Tg can be made use of in a seal that is designed to function at a temperature near or below its Tg. At temperatures near or below Tg, the elastomer has an increased modulus (and hence, an increase in the stress state for the same deformation), which, through the invention, is used to increase the reaction force of the seal.

According to the invention, the seal is so designed to have an asymmetrical cross-section which allows control of shrinkage to create a bending moment within the seal, which opposes the negative effects of volumetric shrinkage of the elastomer material.

The present invention provides an elastomeric seal adapted for use at a temperature near or below its glass transition point characterised in that it has a cross section forming a surface having at least three sides, two of which are concave and one of which is convex.

As used herein, terms have the following meanings.

"Elastomer" means any material which stretch under tension, have a high tensile strength, retract rapidly, and recover their original dimensions substantially fully. Suitable types of elastomers for the manufacture of seals are known to those skilled in the art, and particular such elastomers will be chosen according to the particular end-use application of the seal.

Particularly preferred elastomers according to the invention are those containing two or more of the following repeating units: vinylidene fluoride (VF₂), propylene hexafluoride (HFP), ethylene tetrafluoride (TFE), perfluorinated alkyl vinyl ethers (e.g. perfluorinated methyl or ethyl vinyl ethers (PMVE, PEVE)), and polyolefins (e.g. polypropylene (PP)).

Suitable such elastomers are commercially available from the DuPont Company under the names VITON (an elastomer containing the repeating units VF₂, HFP and TFE, also commonly known as an "FKM" type elastomer); and KALREZ and ZALAK (elastomers containing repeating units of perfluorinated alkyl vinyl ethers, also commonly known as "FFKM" type elastomers).

A temperature "near or below" its glass transition point, means a temperature where the elastomer ceases to behave as a highly viscous incompressible fluid and begins to have an increased modulus, creating a bending moment within the seal when a force is applied.

Such temperature will vary depending upon the particular elastomer material and ingredients with which it is compounded. For FKM and FFKM type elastomers, the glass transition point is typically between about +5 to -30 °C.

Seals according to the invention will typically have axial symmetry since they are particularly adapted for providing a seal in an annular space. The symmetry may be about one of several axes marked "X" and "Y" in Figure 1.

"Annular space", in this context, means the region defined between two concentric cylinders.

"Static application" means an application that does not require movement of the seal with respect to the annular space. Such applications include the aforementioned automobile fuel injectors, mechanical seals and instances where faces or shafts and housing need to be sealed.

The asymmetrical shape of a cross section of the seal according to the invention enables the glass transition point properties of the seal to be used advantageously to maintain a seal where conventionally shaped seals will fail. In particular, the shape of the seal, having two concave sides and one convex side, enables a bending moment to be created in the seal which serves to keep the seal firmly in contact with the two surfaces that define the annular space. The shape of other sides of the seal, if any, is not critical. The other sides may be flat, concave or convex, although preferably are substantially flat.

Preferably, the cross section forms a surface comprising at least five sides: (with reference to Figure 1) a first concave side (1.1), a convex side (1.3) adjacent thereto, a third side (1.2) adjacent to the convex side (1.3), a second concave side (1.4) adjacent to the third side (1.2) and a fifth side (1.5) joining the first and second concave sides (1.1, 1.4).

Of course, modifications to this general shape are possible and are to be considered within the scope of the invention. For example, the convex and concave sides, rather than being smoothly curved as indicated in Figure 1, could be made angular, while still maintaining an outward or inward pitch.

Where the cross section of the seal is five-sided, the length ratio of the first concave side (1.1) to the third side (1.2) is preferably from 5 to 9, more preferably about 6 to 8, most preferably about 7, the length ratio of the convex side (1.3) to the fifth side (1.5) is preferably from 6 to 8, more preferably about 7 and the angle (α) formed between the tangent to the third side and the tangent to the second concave side at the point of intersection of the third side and second concave side is preferably from 45° to 90°, more preferably about 50-60°.

Seals according to the invention can be made using conventional moulding processes, and as such, these processes are not described herein in detail.

Likewise, seals according to the invention are employed in applications heretofore known, albeit at temperatures where known seals fail. As is indicated in Figure 1, a seal according to the invention is positioned within the annular space to be sealed such that the first concave side (1.1) abuts one surface (1.6) defining the annular space and the third side (1.2) abuts the other surface (1.7) defining the annular space. A fluid, whose flow direction is indicated by the arrows in Figure 1, contacts, at least initially, convex side (1.3) of the seal. The force the surfaces of the annular space apply to the seal create a bending moment in the seal whereby at least part of, and advantageously as much of the first concave side (1.1) is kept firmly in contact with the surface (1.7) of the annular space to prevent passage of any fluid through the annular space.

## Claims

1. A elastomeric seal characterised in that it adapted for use in a static application at a temperature near or below its glass transition point and has a cross section forming a surface having at least three sides, two of which are concave and one of which is convex.

2. A seal according to claim 1 having axial symmetry.

3. A seal according to claims 1 or 2 wherein the cross section forms a surface comprising at least five sides.

4. A seal according to claim 3 having a cross section comprising a first concave side (1.1), a convex side (1.3) adjacent thereto, a third side (1.2) adjacent to the convex side (1.3), a second concave side (1.4) adjacent to the third side (1.2) and a fifth side (1.5) joining the first and second concave sides (1.1, 1.4).

5. A seal according to claim 4 wherein the length ratio of the first concave side (1.1) to the third side (1.2) is from 5 to 9 and the length ratio of the convex side (1.3) to the fifth side (1.5) is from 6 to 8 and the angle (α ) formed between the tangent to the third side (1.2) and the tangent to the second concave side (1.4) at the point of intersection of the third side and second concave side is from 45° to 90°.

6. A seal according to any one of claims 1 to 5 wherein the elastomer contains two or more repeating units selected from the group consisting of vinylidene fluoride, propylene hexafluoride, ethylene tetrafluoride, perfluorinated alkyl vinyl ethers and polyolefins.

7. Use of a seal according to any one of claims 1 to 6 in a static application at a temperature near or below its glass transition point to form a seal in an annular space.

8. Use of a seal according to any one of claims 4 to 6 at a temperature near or below its glass transition point to form a seal in an annular space, wherein the first concave side (1.1) abuts the one surface defining the annular space and the third side (1.2) abuts the other surface defining the annular space.
